# EUROPEAN PATENT APPLICATION

(11) **EP 1 195 583 A1**
(43) Date of publication of application: **10.04.2002**
(21) Application number: 01308469.4
(22) Date of filing: 03.10.2001
(51) Int. Cl.: G01G 17/02

(54) **A paper weighing system**

(30) Priority: 04.10.2000 GB 0024269; 01.06.2001 GB 0113349
(71) Applicant: Wright, Steve, Milton Keynes, Bedfordshire MK14 6JO (GB)
(72) Inventor: Wright, Steve, Milton Keynes, Bedfordshire MK14 6JO (GB)
(74) Representative: Goodenough, Nigel

(57) **Abstract**

The present invention relates to paper weighing apparatus comprising electronic circuitry, data input means (34-54,58) for providing the electronic circuitry with information, data output means (33) for displaying information generated by the electronic circuitry, and a platter (27) for receiving paper to be weighed. The electronic circuitry is adapted to receive, via the data input means (34-54,58), information indicating the area of paper received on the platter. The electronic circuitry is further adapted to determine the mass of paper received on the platter (27) by reference to a displacement of the platter (27) and to calculate the mass of a unit area of said paper.

## Description

The present invention relates to a system for weighing paper.

It is well known for paper to be characterised in terms of its weight (more specifically, its mass) for a given unit of area. Typically, this characteristic is expressed in terms of grams per square metre (g/m²).

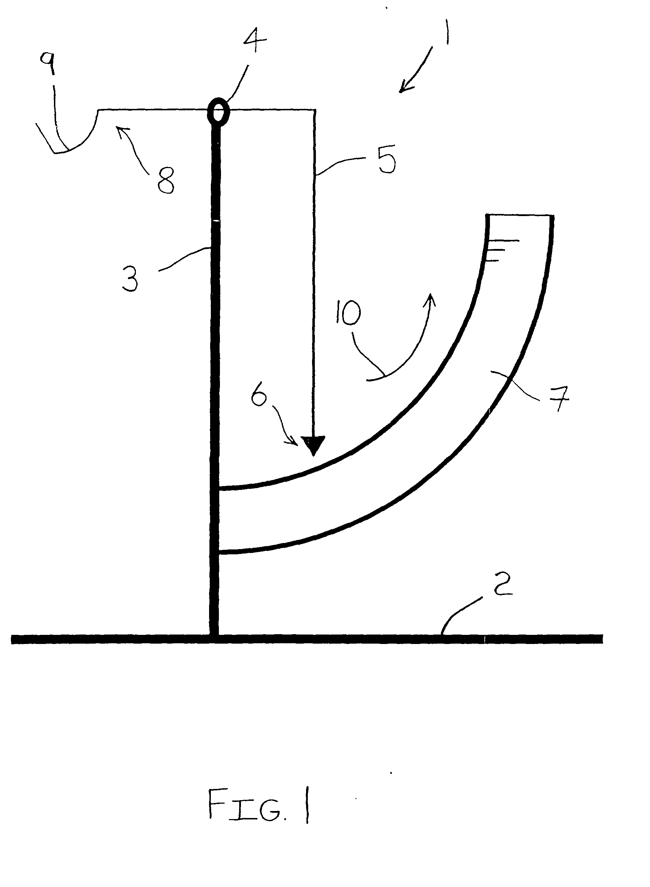

The aforementioned weight characteristic of paper has been traditionally determined through use of a conventional set of scales such as those shown in Figure 1 of the accompanying drawings. The illustrated set of scales 1 comprises a base 2 from which a pivot member 3 perpendicularly extends. The end of the pivot member 3 distal to the base 2 is provided with an eyelet 4 through which a pointer 5 locates. The pointer 5 is arranged so as to be both balanced and rotationally movable within the eyelet 4. A first end 6 of the pointer 5 is located against a calibrated scale 7 mounted to the pivot member 3. A second end 8 of the pointer 5, distal to the first end 6, is provided with a hook 9 for receiving a sample of paper having a predetermined size. Thus, in use of the conventional scales 1, a sample of paper (having a predetermined size) is pierced by the hook 9 and allowed to hang therefrom so as to unbalance the pointer 5. In so doing, the pointer 5 is rotated within the eyelet 4 and the first pointer end 6 is moved in the direction of arrow 10 along the calibrated scale 7. Once the pointer 5 returns to a balanced condition, the weight of the paper sample can be determined with reference to the calibrated scale 7 and the new position of the first pointer end 6.

Although the conventional set of scales shown schematically in Figure 1 is reasonably effective at determining the weight per unit area of paper, a number of problems are associated with its use. Firstly, the sample of paper attached to the hook 9 must be of a predetermined area and, preferably, of a predetermined shape. This can cause particular inconvenience for the user. For example, if the paper sample provided is larger than the standard predetermined paper sample, then the provided sample must be cut to the predetermined size. Of course, if the provided paper sample is smaller than the standard predetermined sample, then the scales cannot be used and alternative means must be used for determining the weight per unit area of the provided sample. Furthermore, use of the conventional scales relies upon an interpretation by the user of the calibrated scale 7. This can lead to undesirable measurement errors and/or inconsistencies. This will be particularly the case where the set of scales is operated by an inexperienced user. It will be noted that errors of interpretation are particularly likely as a result of the first pointer end 6 being viewed at an angle to the calibrated scale 7 rather than square on to said scale 7. In addition to the aforementioned problems, the conventional set of scales can also be inconvenient to use since it requires careful preparation before use. This preparation involves a mounting of the base 2 on a flat, horizontal and even surface and a balancing by hand of the pointer 5 relative to the calibrated scale 7.

It is an object of the present invention to provide a paper weighing system which is more convenient to use than the apparatus and method of the aforementioned prior art system.

The present invention provides apparatus for weighing paper, the apparatus comprising electronic circuitry, data input means for providing the electronic circuitry with information, data output means for displaying information generated by the electronic circuitry, and a platter for receiving paper to be weighed, wherein the electronic circuitry is adapted to receive, via the data input means, information indicating the area of the paper received on the platter, and wherein the electronic circuitry is further adapted to determine the mass of paper received on the platter by reference to a displacement of the platter and to calculate the mass of a unit area of said paper.

The electronic circuitry is preferably adapted to calculate the mass of a square metre of said paper. The electronic circuitry may also be adapted to express the mass of paper in grams.

It is particularly preferable for the electronic circuitry to be adapted to receive, via the data input means, information indicating the amount of ink or print covering the paper received on the platter and to deduct an estimate of the mass of said ink or print from the mass determined by reference to a displacement of the platter. The electronic circuitry may be adapted to calculate an estimate of the mass of said ink or print by reference to a predetermined magnitude of the mass of ink or print covering a unit area of paper. Furthermore, the information indicating the amount of ink or print covering the paper may be expressed in terms of the percent of surface area of paper covered by ink or print.

It is particularly preferable for the data input means to comprise means for indicating one or more predetermined extents of ink or print coverage on paper. A first predetermined extent of ink or print coverage on paper may relate to between 5% and 20% of paper being covered by ink or print, a second predetermined extent may relate to between 21% and 64% of paper being covered by ink or print, and a third predetermined extent may relate to between 65% and 95% of paper being covered by ink or print.

It is also desirable for the data input means to comprise means for measuring the area of paper received on the platter. The paper area measuring means may comprise a light source and an array of light sensing elements, said source and said array of elements being spaced from one another and arranged so as to receive therebetween paper received on the platter. The platter may comprise a transparent or translucent material.

The array of light sensing elements may comprise a line of said elements extending across the width of a surface of the platter for receiving paper, wherein said elements are mounted on support means movable along the length of said surface. The array of light sensing elements may also be arranged in a plane parallel to a surface of the platter upon which paper is received during use. Preferably, each light sensing element is a photodiode. Also, the light source preferably comprises an array of Light Emitting Diodes or lasers. The array of Light Emitting Diodes or lasers is ideally arranged in a plane parallel to a surface of the platter upon which paper is received during use. The array of light sensing elements may comprise one line of elements extending across the width of the surface of the platter for receiving paper and one line of elements extending along the length of said surface.

It is also desirable for the electronic circuitry to be adapted to determine the dimensions of paper received on the platter by reference to output signals from the array of light sensing elements.

An embodiment of the present invention will now be described with reference to the accompanying drawings, in which:
Figure 1 is a schematic view of a prior art set of scales for weighing a sample of paper; and
Figure 2 is a schematic view of an embodiment of the present invention.

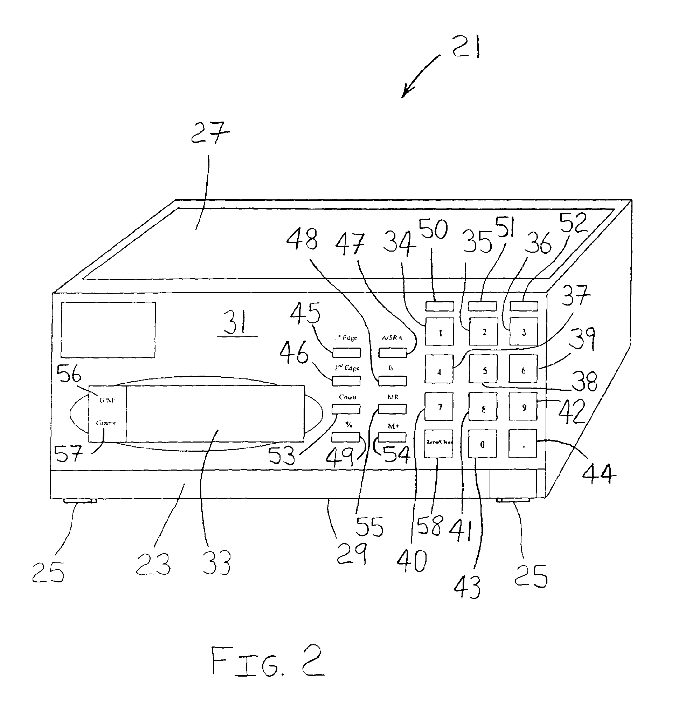

A new and improved paper scale 21 is schematically shown in the perspective view of Figure 2. This embodiment 21 of the present invention comprises a metallic outer casing 23 for housing electronic circuitry (not shown), four feet 25 (only two of which are visible in the view of Figure 2) for securely locating the casing 23 on a horizontal and level surface, and a platter 27 for receiving samples of paper to be analysed. Each of the four feet 25 is rubber mounted to the casing 23. Each of the feet 25 is also adjustable so as to be extendable from a lower surface 29 of the casing 23 and allow said casing 23 to be orientated with the platter 27 in a horizontal plane.

A front panel 31 of the casing 23 is provided with a plurality of user keys 34-54,58 and an LCD screen 33. The plurality of user keys allows an operator to provide instructions to the electronic circuitry housed within the casing 23. The LCD screen 33 allows the results of analysis undertaken by said electronic circuitry to be displayed to the operator.

The specific functions of the various user keys in combination with said electronic circuitry will be described below. However, in summary, the user keys and electronic circuitry are adapted to allow an operator to weigh substantially any size of paper sample. This is achieved by the operator providing the electronic circuitry (by means of the user keys) with the area magnitude of the paper sample or sufficient information to permit calculation of the area magnitude. In the specific embodiment 21 of Figure 2, paper samples of a square or rectangular shape may be weighed with the operator providing the electronic circuitry with the lengths of two adjacent sides of the paper sample by means of numeric user keys 34-44 in combination with first and second paper edge keys 45,46. The mass per unit area of sample paper may then be displayed on the LCD screen 33. The units of this quantity are given in grams per square metre (g/m² or gsm) in accordance with industry standards. In the alternative, the LCD screen 33 may simply present the mass of the paper sample held on the platter 27.

The paper scale 21 is adapted to weigh any size of paper sample from 30mm x 30mm to the standard European B1 size (710mm x 1020mm). However, the electronic circuitry is adapted to provide particular accuracy in respect of paper samples in the range of 47mm x 47mm at 80g/m² to 450mm x 640mm at 450g/m².

The electronic circuitry of the illustrated embodiment 21 shown in Figure 2 is also adapted to provide a mass per unit area value for pre-programmed standard sizes of paper. The standard sizes of paper pre-programmed into the electronic circuitry are as follows:

| | |
|---|---|
| The A Size Range: | A4 |
| | A5 |
| | A3 |
| | |
| The SRA Size Range | SRA3 |
| | SRA2 |
| | SRA1 |
| | |
| The B (European) Size Range | B 1 |
| | B2 |
| | |
| The B (UK) Size Range | B1 |
| | B2 |

Thus, as an alternative to measuring the length of two adjacent sides of a paper sample and then entering these lengths (by means of the numeric user keys 34-44 in combination with the first paper edge and second paper edge user keys 45,46), an operator can simply select the standard paper series in question using the pre-programmed size user keys 47,48 and then use the aforementioned numeric user keys to select the particular paper size within said chosen series.

The scale 21 of the present invention is also adapted to compensate for ink printed on a paper sample. Through the use of an ink compensation key 49 in combination with one of three pre-set percentage ink coverage keys 50-52, an operator may account for ink supplied on sample paper. For example, the first pre-set ink coverage key 50 may relate to an ink coverage of between 5% and 20% of the paper sample (light coverage). The second pre-set ink coverage key 51 may relate to an ink coverage of between 21% and 64% of the paper (medium coverage), whereas the third pre-set ink coverage key 52 may relate to an ink coverage of between 65% and 95% of the paper sample (heavy coverage). Thus, with regard to the medium coverage setting, the electronic circuitry may assume that the paper mass is, for example, 94.55% that of the measured value relating to the mass of both the paper and the ink.

The electronic circuitry of the paper scale 12 is also adapted to count an unknown number of substantially identical items placed on the platter 27. This counting function is achieved by the electronic circuitry being provided with the mass of a known number of items to be counted. It is then possible for the electronic circuitry to calculate the number of items within a further sample with reference to the mass of that sample. The counting feature may be selected through use of the count user key 53. The number of items counted can be added to a temporary memory of the electronic circuitry by means of the M+ user key 54. The total number of items counted and stored within the temporary memory may be presented on the LCD display 33 by means of the MR user key 55. The temporary memory of the electronic circuitry may be cleared at any stage through use of a zero / clear key 58.

The mode of operation of the electronic circuitry is indicated by means of two Light Emitting Diodes (LEDs). A first LED (not shown) illuminates adjacent a "g/m²" symbol 56 when measuring the mass per unit area of a paper sample. Similarly, a second LED (not shown) illuminates adjacent a "Grams" symbol 57 when the electronic circuitry is simply determining the mass of one of more paper samples (or other items). The first and second LEDs do not illuminate at the same time. However, if neither the first nor the second LED illuminates, then the operator is thereby notified that the electronic circuitry is functioning to count items as described above.

Use of the paper scale 21 will now be described in detail with reference to the aforementioned user keys:

When paper scale 21 is switched on, the electronic circuitry automatically configures to the mode for determining the mass per unit area of a paper sample. The temporary memory of the electronic circuitry may be cleared at any stage through use of a zero / clear key 58.

### A/SRA Key 47

The A sizes and SRA sizes are selected by pressing user key 47 which toggles between these two options.

### Selecting an A size

■ Press zero / clear key 58.
■ Press the **A/SRA** key 47 once - the display 33 will show "A".
■ Press one of the 1 to 5 numeric keys (34 to 38) to select the paper size (e.g. pressing 4 selects A4).

The display 33 will show the paper size for three seconds before switching to 0.00g/m² and an **A/SRA** LED will remain illuminated until another function is selected.
■ Place the A4 sheet of paper on the platter 27.

The display 33 will now show the weight of the paper in g/m² and the g/m² LED will be illuminated.
Standard A sizes are as follows:
**5 -** (A5) 148mm x 210mm
**4 -** (A4) 297mm x 210mm
**3 -** (A3) 420mm x 210mm

### Selecting an SRA size

■ Press zero / clear key.
■ Press the **A/SRA** key 47 twice - the display 33 will show "SrA".
■ Press one of the 1 to 3 numeric keys (34 to 36) to select the paper size (e.g. pressing 3 selects SRA 3 or 320mm x 450mm).

The display 33 will scroll the paper size for three seconds (320 then 450) before switching to 0.00g/m² and the A/SRA LED will remain illuminated until another function is selected.
■ Place the SRA sheet of paper on the platter 27.

The display 33 will now show the weight of the paper in g/m² and the g/m² LED will be illuminated.

SRA sizes are as follows:
**3 -** (SRA3) 320mm x 450mm
**2 -** (SRA2) 450mm x 640mm
**1 -** (SRA1) 640mm x 900 mm

The electronic circuitry calculates a figure rounded to the nearest gram. For instance, even if an accurate weight is calculated as 152.462 g/m², a figure of 152 g/m² will be displayed.

### B Key 48

There are two different types of B sizes - European and UK (hereinafter referred to as EU and GB). The GB and EU sizes are selected by pressing the B key 48 so as to toggle between these two options.
■ Press B key 48 to select between B-EU and B-GB paper sizes.
■ Press one of the 1 and 2 numeric keys 34,35 to select the required paper size. Standard sizes are as follows:
   - **b1 - GB**: Size 700mm x 1000mm
   - **b2 - GB**: Size 500mm x 700mm

   - **b1** - **EU**: Size 720mm x 1020mm
   - **b2** - **EU**: Size 520mm x 720mm

The display 33 will scroll the paper size for three seconds (e.g. 500 then 700) before switching to 0.00g/m² and a B LED will remain illuminated until another function is selected.
■ Place the B size sheet of paper on the platter 27.

The display 33 will now show the weight of the paper in g/m² and the g/m² LED will be illuminated.

### Zero / Clear Key 58

Pressing the Zero / Clear key clears all display readings and zeros the scale.

### Custom Paper Sizes

■ Key in the dimension of the first edge in mm with the numeric keys 34 - 44 and press the first edge key 45. A first edge LCD will be illuminated.

The display 33 will now ask for the second edge dimension in mm.
■ Key in the second edge dimension in mm with the numeric keys and press the second edge key 46. First and second edge LCDs will now be illuminated.
■ Place the sheet of paper on the platter 27.

The display 33 will now show the weight of the paper in g/m² and the g/m² LED will be illuminated.

### Print percentage on paper

This option will allow the operator to make allowances for the degree of print coverage per piece of paper being weighed.
■ Press the % key 49 and then either of the three ink coverage keys 50,51,52 to indicate the degree of print coverage on the paper.

The display 33 will show: **1** for light, **2** for medium or **3** for full coverage, for three seconds.

The display 33 will then show the weight of the paper in g/m² without the print coverage affecting the final reading.

When the % key 49 is first pressed, a % LED will be illuminated.

### Count function

■ Press the Zero / clear key.
■ Place a known number of parts on the platter 27, enter this number with the numeric keys, and then press the Count key 53.

The display 33 will show SET for three seconds before indicating the number of parts entered.

The g/m² and grams LEDs will not be illuminated so as to indicate that the paper scale is in Count mode.
■ A unknown number of parts can now be placed on the platter 27 and counted by the paper scale. The number of parts counted is shown on the display 33.

### M+ key

This key will allow the operator to store counted parts to memory

By pressing the key once, the scale will save, to the temporary memory, the number of parts shown on the display 33 and an M+ LCD will be illuminated.

Each time the M+ key is pressed, the number of parts shown on the display will be added to the total stored in the memory.

To recall the memory, press the MR key and the display 33 will show the total number of parts stored in the memory before returning back to Count mode after approximately three seconds.

Once the Zero / Clear key 58 is pressed, all data stored in the memory is removed.

The present invention is not limited to the specific embodiment described above. Further arrangements will be apparent to the skilled reader. For example, the paper scale 21 may be provided with means for automatically measuring the area of a paper sample received on the platter 27.

In this latter regard, a further embodiment of the present invention includes a boom spanning the width of the platter. The boom is located below the platter within the casing 23 and is arranged so as to be movable during use along the length of the platter. The platter itself is manufactured from a transparent or translucent material so as to allow light to fall upon a plurality of photodiodes arranged in single file along the length of the boom. Although other arrangements are possible, it is preferable for one photodiode to be provided at one millimetre intervals along the boom length. As will be appreciated, this will allow a measurement of paper along the length of the boom to be made to the nearest millimetre.

A cover member housing a light source is also hingedly attached to the casing so as to be rotatable between an open configuration, in which paper may be placed on the platter, and a closed configuration, in which the cover member is laid over the platter. The light source preferably comprises an array of Light Emitting Diodes or lasers so as to provide light which projects downwardly through the platter onto the photodiodes.

In use, when a paper sample is placed on the platter, only those photodiodes located to the sides of said sample will receive light from said light source. The photodiodes directly beneath the paper sample will not receive light from the light source. The electronic circuitry is connected to the array of photodiodes and is adapted to determine the width of paper sample directly above the boom by reference to the number of photodiodes not receiving and/or receiving light. Thus, where photodiodes are provided for every millimetre of boom length and 150 photodiodes are detected as not receiving light, then the electronic circuitry will calculate the local width of the paper sample as 0.15 metres. In order to determine the area of the paper sample, the boom is moved in a controlled manner along the length of the platter. In this way, the width of paper sample for every millimetre (or other integer) of paper sample length can be determined. Accordingly, the area of any shape of paper sample can be determined. In this regard, it will be appreciated that the paper sample need not have straight edges for the area to be determined.

## Claims

1. Apparatus (21) for weighing paper, the apparatus (21) comprising electronic circuitry, data input means (34-54, 58) for providing the electronic circuitry with information, data output means (33) for displaying information generated by the electronic circuitry, and a platter (27) for receiving paper to be weighed, wherein the electronic circuitry is adapted to receive, via the data input means (34-54, 58), information indicating the area of paper received on the platter (27), and wherein the electronic circuitry is further adapted to determine the mass of paper received on the platter (27) by reference to a displacement of the platter (27) and to calculate the mass of a unit area of said paper.

2. Apparatus (21) as claimed in claim 1, wherein the electronic circuitry is adapted to receive, via the data input means (34-54, 58), information indicating the amount of ink or print covering the paper received on the platter (27) and to deduct an estimate of the mass of said ink or print from the mass determined by reference to a displacement of the platter (27).

3. Apparatus (21) as claimed in claim 2, wherein the electronic circuitry is adapted to calculate an estimate of the mass of said ink or print by reference to a predetermined magnitude of the mass of ink or print covering a unit area of paper.

4. Apparatus (21) as claimed in any preceding claim, wherein the data input means (34-54,58) comprises means for indicating one or more predetermined extents of ink or print coverage on paper.

5. Apparatus (21) as claimed in any preceding claim, wherein the data input means (34-54, 58) comprises means for measuring the area of paper received on the platter (27).

6. Apparatus (21) as claimed in claim 5, wherein said paper area measuring means comprises a light source and an array of light sensing elements, said source and said array of elements being spaced from one another and arranged so as to receive therebetween paper received on the platter (27).

7. Apparatus (21) as claimed in claim 6, wherein said array of light sensing elements comprises a line of said elements extending across the width of a surface of the platter (27) for receiving paper, wherein said elements are mounted on support means movable along the length of said surface.

8. Apparatus (21) as claimed in claim 6 or 7, wherein each light sensing element is a photodiode.

9. Apparatus (21) as claimed in any of claims 6 to 8, wherein said light source comprises an array of Light Emitting Diodes or lasers.

10. Apparatus (21) as claimed in any of claims 6 to 9, wherein said array of light sensing elements comprises one line of elements extending across the width of a surface of the platter (27) for receiving paper and one line of elements extending along the length of said surface.

11. Apparatus (21) as claimed in any of claims 6 to 10, wherein the electronic circuitry is adapted to determine the dimensions of paper received on the platter (27) by reference to output signals from the array of light sensing elements.
